(19) Europäisches Patentamt
European Patent Office
Office européen des brevets

(11) **EP 1 581 059 B1**

(12) **EUROPÄISCHE PATENTSCHRIFT**

(45) Veröffentlichungstag und Bekanntmachung des Hinweises auf die Patenterteilung:
**18.06.2008   Patentblatt 2008/25**

(21) Anmeldenummer: **04700436.1**

(22) Anmeldetag: **07.01.2004**

(51) Int Cl.:
**A21B 1/00** (2006.01)

(86) Internationale Anmeldenummer:
**PCT/DE2004/000003**

(87) Internationale Veröffentlichungsnummer:
**WO 2004/062372 (29.07.2004 Gazette 2004/31)**

(54) **GAREN UNTER AUSNUTZUNG EINER CLUSTER-ANALYSE UND GARGER TE H   IERF R**

COOKING BY UTILIZING A CLUSTER ANALYSIS AND COOKING UTENSILS THEREFOR

PROCEDE DE CUISSON FAISANT APPEL A UNE ANALYSE CLUSTER, ET DISPOSITIFS DE CUISSON POUR LA MISE EN OEUVRE DE CE PROCEDE

(84) Benannte Vertragsstaaten:
**DE FR GB IT**

(30) Priorität: **09.01.2003   DE 10300465**

(43) Veröffentlichungstag der Anmeldung:
**05.10.2005   Patentblatt 2005/40**

(73) Patentinhaber: **Rational AG
86899 Landsberg/Lech (DE)**

(72) Erfinder: **BLASCHKE, Günter
86807 Buchloe-Honsolgen (DE)**

(74) Vertreter: **Weber-Bruls, Dorothée
Forrester & Boehmert,
Pettenkoferstrasse 20-22
80336 München (DE)**

(56) Entgegenhaltungen:
EP-A- 0 271 380          EP-A- 1 170 650
DE-A- 19 718 399         US-B1- 6 202 038

• PATTIPATI K R ET AL: "CONFIDANTE: A COMPUTER-BASED DESIGN AID FOR THE OPTIMAL SYNTHESIS, ANALYSIS AND OPERATION OF MAINTENANCE FACILITIES" PROCEEDINGS OF THE INTERNATIONAL AUTOMATIC TESTING CONFERENCE. (AUTOTESTCON). WASHINGTON, NOV. 5 - 7, 1984, PROCEEDINGS OF THE INTERNATIONAL AUTOMATIC TESTING CONFERENCE. (AUTOTESTCON). FROM 1990: SYSTEMS READINESS TECHNOLOGY CONFERENCE, NEW YORK, IE, Bd. CONF. 20, 1. November 1984 (1984-11-01), Seiten 390-404, XP000745700
• POSTAIRE J G ET AL: "CLUSTER ANALYSIS BY BINARY MORPHOLOGY" IEEE TRANSACTIONS ON PATTERN ANALYSIS AND MACHINE INTELLIGENCE, IEEE INC. NEW YORK, US, Bd. 15, Nr. 2, 1. Februar 1993 (1993-02-01), Seiten 170-180, XP000348902 ISSN: 0162-8828

**Beschreibung**

Die Erfindung betrifft ein Verfahren zum Garen von Gargut in einem Garraum eines Gargerätes mit einer Steuer- und/oder Regeleinrichtung, die Zugriff hat auf primäre, zeitlich geordnete Meßdaten zumindest einer Gargut- und/oder Gargerätegröße sowie sekundäre, zeitlich nicht geordnete Daten, in deren Abhängigkeit der Garprozeß geführt wird, sowie ein Gargerät, mit dem solch ein Verfahren realisierbar ist.

Beispielsweise aus der DE 197 18 399 A1 ist ein gattungsgemäßes Verfahren zum Garen von Gargut in einem Gargerät mit einem Garraum sowie einer Meßeinrichtung zum Aufnehmen von zumindest einer Gargut- und/oder Gargeräte-Zustandsgröße, in deren Abhängigkeit der Garprozeß geführt wird, bekannt. Bei diesem bekannten Verfahren wird der Zeitpunkt des Endes des Garvorgangs auf der Grundlage von Werten zumindest einer Gargutzustandsgröße, die während des Garprozesses zu verschiedenen Zeiten, also nicht in Testschritten, ermittelt wird, sowie eines vorgegebenen Endwertes der Gargutzustandsgröße am Ende des Garvorgangs bestimmt, wobei die Zeitdauer bis zum Erreichen eines durch besagten Endwert des Gargutzustandes festgelegten Endzustands extrapoliert wird, und die Extrapolation auf dem bisherigen Garverlauf basiert.

Aus der DE 196 09 116 A1 ist es bekannt, in einem Testschritt die Kerntemperatur mehrmals nacheinander zu einem definierten Zeitpunkt abzutasten und unter gleichzeitiger Berücksichtigung der zu der abgetasteten Kerntemperaturänderung gehörigen Garraumtemperatur auf den Abtastwerten den Endzeitpunkt zu ermitteln, zu welchem eine Soll-Kemtemperatur erreicht sein sollte. Diese Ermittlung geschieht durch Lösung von Differentialgleichungen.

In der US 5,352,866 ist die Bestimmung einer Garzeit mehr oder weniger nach den Prinzipien eines Proportional-, Differential- und Integral-Reglers, basierend auf gespeicherten Zeit-Temperatur-Verläufen, beschrieben.

Aus der US 4,970,359 und US 4,682,013 ist es bekannt, den Garverlauf in unterschiedliche Abschnitte aufzuteilen, wobei bis zu einem speziellen Punkt gemessen wird und danach eine Regelung stattfindet, basierend auf speziellen Formeln und gespeicherten Meßdaten.

In der GB 2 203 320 A1 ist allgemein ein Vergleichen mit einer gespeicherten Modellkurve angesprochen.

Aus der EP 0 701 387 A2 ist es bekannt, einen Merkmalsvektor zur Bestimmung einer Garkurve heranzuziehen, der eine maximale Veränderungsrate der Feuchtigkeit, den Wert der Feuchtigkeit bei seiner maximalen Veränderungsrate, die Zeit zum Erreichen eines bestimmten Feuchtigkeitswertes und/oder die mittlere Feuchtigkeit zwischen zwei bestimmten Punkten berücksichtigt.

Die EP 0 550 312 A2 beschreibt die Steuerung eines Garverlaufes über kurzzeitig gespeicherte Daten.

In vielen Bereichen des täglichen Lebens und der wissenschaftlichen Forschung sieht man sich genötigt, eine in der Regel große Menge von Objekten anhand von Test- und Versuchsergebnissen, also Eigenschaften, in eine im allgemeinen kleinen Anzahl von Gruppen, Klassen, Cluster, Haufen oder dergleichen aufzuteilen, bzw. einzelne Elemente der Objektmenge zu Gruppen zusammenzufassen, und zwar so, daß die einzelnen Gruppen in sich möglichst homogen, die Unterschiede zwischen den Gruppen jedoch möglichst groß sind. Dadurch sollen vorhandene Strukturen der Objektmenge erkennbar und interpretierbar werden. So ist beispielsweise die Cluster-Analyse bereits in empirischen Wissenschaften, wie der Psychologie, Medizin, Biologie, Geologie, Kriminalistik und Betriebswirtschaft eingesetzt worden, siehe beispielsweise "Kurzfristige simultane Planung des Verkaufs-, Produktions- und Beschaffungsprogramms in modulabhängigen Saisonunternehmen als adaptiver Prozeß", von Dr. Günter Blaschke, erschienen bei Peter Lang, in Reihe V Volks- und Betriebswirtschaft, Volumen 218, 1979. Die Aufgabe der Cluster-Analyse basiert darauf, daß eine Menge von Objekten, also Merkmalsträgem, gegeben ist, von denen jedes einen bestimmten Meßwert, also Merkmalsausprägung, bei einer Anzahl von Eigenschaften aufweist, und Gruppierungen der Objekte gesucht werden, in denen eine mehr oder minder große Ähnlichkeit in allen Eigenschaften herrscht.

Trotz der zahlreichen bekannten Garprozeßführungsverfahren besteht noch stets die Nachfrage nach einem optimierten Führungsverfahren.

Es ist daher die Aufgabe der Erfindung, ein optimiertes Verfahren zum individuellen Führen eines Garprozesses zu liefern.

Diese Aufgabe wird erfindungsgemäß durch die kennzeichnenden Merkmale von Patentanspruch 1 gelöst.

In den Ansprüchen 2 bis 12 sind bevorzugte Ausführungsformen des erfindungsgemäßen Verfahrens beschrieben.

Auch wird mit der Erfindung ein Gargerät mit einem Garraum, einer Meßeinrichtung zum Erfassen von Meßdaten, einer Speichereinrichtung zum Speichern von Meßdaten und daraus bestimmten Größen und einer Steuer- und/oder Regeleinrichtung zum Führen eines Garprozesses gemäß dem erfindungsgemäßen Verfahren vorgeschlagen.

Dabei kann vorgesehen sein, daß die Meßeinrichtung und die Steuer- und/oder Regeleinrichtung in einem ausgebildet sind, vorzugsweise ebenfalls umfassend die Speichereinrichtung, insbesondere integriert in einem Garprozeßfühler.

Der Erfindung liegt somit die überraschende Erkenntnis zugrunde, daß mit Hilfe der Cluster-Analyse, die im wesentlichen aus der empirischen Sozialforschung bekannt ist, sich Garverfahren trotz ihrer hochkomplexen Sachzusammenhänge verdichten, typisieren, profilieren und mathematisch eindeutig kennzeichnen sowie beschreiben lassen.

Dabei reduziert sich das Problem auf einige wenige zu definierende Schlüsselgrößen anstelle der Isolierung und Berücksichtigung einer unendlichen Anzahl von Einzeleinflußgrößen. Insbesondere können neue Garprozeß-Ist-Abläufe bereits frühzeitig anhand ihrer typischen Ausprägung erkannt und automatisch einem repräsentativen Garprofil zugeordnet werden. So wird ein weiterer Schritt in Richtung eines vollautomatisierten Garens gegangen.

Die Gesamtheit der zu einem Garverlauf gehörenden Datenmengen, die ein Datenpaket darstellt, enthält nicht nur primäre, zeitlich geordnete Meßdaten, wie den Gewichtsverlust eines Gargutes, die Kerntemperatur eines Gargutes, die Feuchtigkeit im Garraum, die Garraumtemperatur oder dergleichen, sondern auch sekundäre Daten, beispielsweise die Witterung, das Datum, die geographische Lage oder dergleichen, die eine zusätzliche Hilfe bei der automatischen Erkennung eines Nutzerziels bieten. Ein Cluster kann nun gebildet werden, wenn eine hinreichende Menge von Datenpaketen, die Gemeinsamkeitskriterien für ein Cluster erfüllen, vorhanden sind. Zur Clusterung können mehrere mathematische Methoden, wie eine Regression, ein Ähnlichkeitsvergleich, eine Interpolation, eine Extrapolation oder dergleichen, herangezogen werden. Erfüllt ein Vergleich die typischen Gemeinsamkeitskriterien, gilt ein Garverlauf als erkannt. Außerdem kann bei einem positiven Vergleichsresultat ein Datenpaket nach Konvertierung in ein für das Cluster typisches Format dem Cluster angefügt werden, so daß ein Selbstlernungsprozeß stattfindet.

Weitere Merkmale und Vorteile der Erfindung ergeben sich aus der nachfolgenden Beschreibung, in der ein Ausführungsbeispiel der Erfindung anhand von schematischen Zeichnungen im Einzelnen erläutert wird. Dabei zeigt:

Figur 1a und Figur 1b   eine typische Merkmalsausprägung bzw. einen typischen Verlauf von primären Meßdaten als Funktion der Garzeit;

Figur 2   den akkumulierten Prozentsatz eines Garprozeß-Ist-Ablaufs bezogen auf einen vorgegebenen 100%-Endwert, als Funktion der Garzeit zum Garendzeitpunkt;

Figur 3   zwei Kurven gemäß Figur 2 zur Erläuterung der erfindungsgemäßen Klassifizierung; und

Figur 4   einen Garprozeß-Ist-Ablauf im Vergleich zu einem repräsentativen Garprofil zur Illustration der erfindungsgemäßen Führung eines Garprozesses.

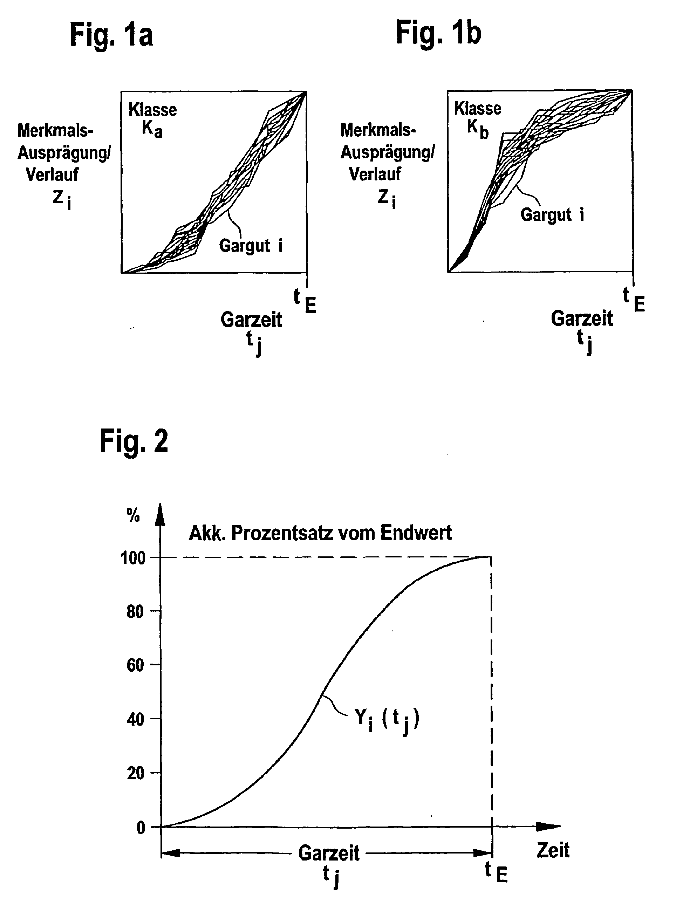

In Figur 1a sind Garprozeß-Ist-Abläufe für unterschiedliche Gargüter i, die einer Klasse $K_a$ zugeordnet sind und beispielsweise nur primäre Meßdaten $Z_i$, wie in Form eines Gewichtsverlustes eines Gargutes, wiedergegeben, dargestellt. Figur 1b zeigt Garprozeß-Ist-Abläufe primärer Meßdaten $Z_i$ für eine Vielzahl von Gargütern i einer zweiten Klasse $Z_b$, analog zu Figur 1a. Die Figuren 1a und 1b veranschaulichen am Verlauf der primären Meßdaten $Z_i$, im Vergleich, wie unterschiedlich Garprozeßmerkmale über die Garzeit $t_j$ für zwei unterschiedliche Gargut-Klassen $K_a$ und $K_b$ ausgeprägt sein können. Gleichzeitig veranschaulichen die Figuren 1a und 1b jedoch auch, daß unterschiedliche Gargüter i innerhalb einer Klasse $K_a$ beziehungsweise $K_b$ nicht völlig unterschiedliche Garprozeß-Ist-Abläufe bezüglich einer Gargut-Zustandsgröße $Z_i$, wie in Form des Gewichtsverlusts des Garguts i, haben müssen. Vielmehr lassen sich tatsächlich Gargüter i bestimmten Gargutklassen $K_n$ zuordnen, für die ein bestimmtes Garprofil $X_n$ bezüglich eines oder mehrerer Meßkriterien, insbesondere der Gargut-Zustandsgröße $Z_i$, typisch ist. Im Folgenden wird davon ausgegangen, daß es sich bei der Gargut-Zustandsgröße $Z_i$ um den Gewichtsverlust Z; des Garguts i handelt.

Die Garprozeß-Ist-Abläufe des Gewichtsverlusts $Z_i$ verschiedener Gargüter i müssen im Rahmen der Cluster-Analyse erfindungsgemäß untereinander vergleichbar gemacht werden. Aus diesem Grunde müssen die Garprozeß-Ist-Abläufe in einer Form dargestellt werden, der man die Besonderheiten derselben entnehmen kann. Hierzu eignet sich erfindungsgemäß die Bestimmung des jeweils akkumulierten Prozentsatzes $Y_i$ von einem beispielsweise als Sollwert vorgegebenen 100%-Endwert des Gewichtsverlusts $Z_i(t_E)$ zum Garendzeitpunkt $T_E$. Der Sollwert kann beispielsweise aus einer Tabelle per Hand für das jeweilige Gargut i in ein nicht dargestelltes Gargerät eingegeben werden. In Figur 2 ist solch ein akkumulierter Prozentsatz $Y_i(t_j)$ für das Gargut i als Funktion der Zeit $t_j$ dargestellt.

Um eine Cluster-Analyse bei der Führung eines Garprozesses anwenden zu können, ist ein vernünftiges Ähnlichkeitsmaß zu definieren. Zu diesem Zweck wird erfindungsgemäß die komplette Garzeit bis zum Garendzeitpunkt $t_E$ in eine geeignete Anzahl j von Intervallen, beispielsweise 10 Intervalle, zerlegt, und für jedes Zeitintervall $t_j$ eine Abstandsquadratsumme $A_{il}$ zweier akkumulierter Prozentsatz-Kurven $Y_i(t_j)$ und $Y_1(t_j)$ berechnet, und zwar wie folgt:

$$A_{il}(t_E) = \sum_{j=0}^{E} (Y_i(t_j) - Y_l(t_j))^2 .$$

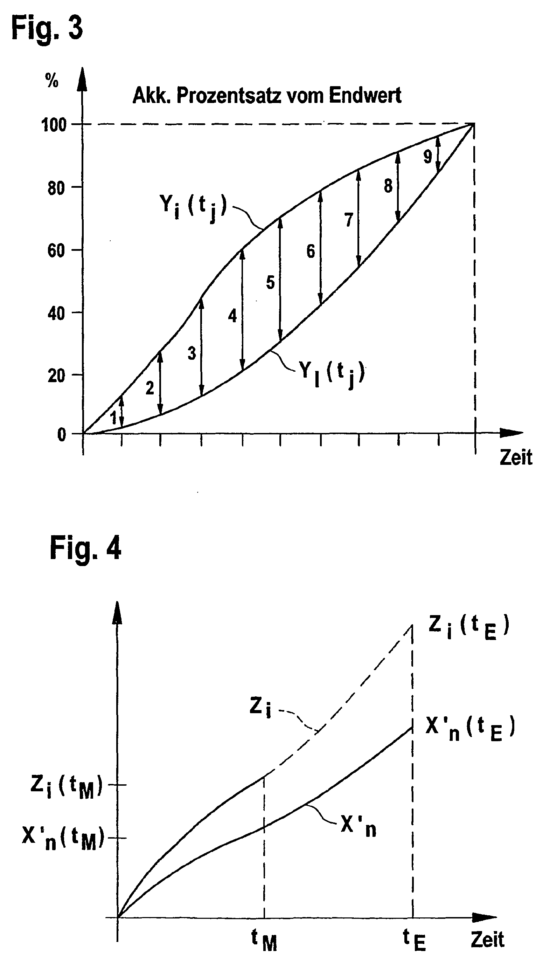

Figur 3 veranschaulicht die Ermittlung der Abstandsquadratsumme $A_{il}(t_E)$ aus den Differenzen der beiden

akkumulierten Prozentsatzkurven $Y_i(t_j)$ und $Y_1(t_j)$ für jedes Zeitintervall $t_j$, nach Quadrierung und Aufsummierung.

In Abhängigkeit von einer sinnvollen Anzahl N von Klassen $K_n$ für die Gargüter i, beispielsweise 10 Klassen, muß dann ein zulässiger Maximalwert für die Abstandsquadratsumme $A_{il}(t_E)$ zur Aufteilung der Garprozeß-Ist-Abläufe $Z_i$ in verschiedene Klassen $K_n$ ermittelt werden, so daß in einer Klasse $K_n$ alle Gargüter i, I zusammengefaßt werden, deren Abstandsquadratsummen $A_{il}(t_E)$ unterhalb des Maximalwerts liegen. Innerhalb einer Klasse $K_n$ liegt dann ein großes Ähnlichkeitsmaß des Verlaufs des Gewichtsverlusts $Z_i$ vor, während jedoch zwischen den Klassen $K_n$ ein kleines Ähnlichkeitsmaß vorliegt. Für jede Klasse $K_n$ wird auch ein Repräsentant, also ein repräsentatives Garprofil $X_n(t_j)$, aus dem Schwerpunkt der Prozentsätze $Y_i(t_j)$ für jedes Zeitintervall $t_j$ ermittelt.

Nach Bestimmung der Klassen $K_n$ und Ermittlung der repräsentativen Garprofile $X_n(t_j)$ gemäß der Cluster-Analyse, einschließlich Speicherung, kann für jedes Gargut i vom Gargerät eigenständig ein Vergleich zwischen einem erfaßten Garprozeß-Ist-Ablauf und den gespeicherten repräsentativen Garprofilen $X_n(t_j)$ durchgeführt werden, um dann den Garprozeß zu führen. Zu diesem Zweck wird für jede Klasse $K_n$ innerhalb eines bestimmten Zeitintervalls $t_M$ mit $t_M < t_E$ ein Abweichungswert $S_{in}(t_M)$ wie folgt ermittelt:

$$S_{i_n}(t_M) = \sum_{j=0}^{M}\left(\left(\frac{Y_i(t_j)}{X_n(t_j)}\right) - \left(\frac{Y_i(t_{j+1})}{X_n(t_{j+1})}\right)\right)^2 \ .$$

Aus all den Abweichungswerten $S_{i_n}(t_M)$ wird dann erfindungsgemäß pro Garprozeß-Ist-Ablauf, dargestellt als akkumulierter Prozentsatz $Y_i(t_j)$ zum Endwert $t_E$, das repräsentative Garprofil $X_n(t_j)$ herausgesucht, bei dem der Abweichungswert $S_{in}(t_M)$ den kleinsten Betrag aufweist. Als Ergebnis dieser Zuordnung läßt sich nun der Endwert der erfaßten Zustandsgröße $Z_i(t_E)$, also des Gewichtsverlusts, über das zugeordnete repräsentative Garprofil $X_n(t_j)$ prognostizieren. Dabei kann erfindungsgemäß angenommen werden, daß die bis zum Zeitpunkt $t_M$ erfaßte, also unvollständige, Garprozeß-Ist-Kurve $Y_j(t_M)$ und das zum Zeitpunkt $t_M$ ermittelte repräsentative Garprofil $X_n(t_M)$ bis zum Garendzeitpunkt $t_E$ einen gleichartigen Verlauf aufweisen, und zwar sich ausschließlich um eine multiplikative Konstante $P_{in}$ unterscheiden. Diese Konstante $P_{in}$ wird zum Zeitpunkt $t_M$ wie folgt berechnet:

$$P_{i_n} = \frac{Y_i(t_M)}{X_n(t_M)} \ .$$

Schließlich muß zum erfindungsgemäßen Führen des Garprozesses lediglich die ermittelte Konstante $P_{in}$ mit dem Wert des repräsentativen Garprofils $X_n$ zum Garendzeitpunkt $t_E$ multipliziert werden, und zwar wie folgt:

$$X_n(t_E)P_{i_n} = Y_i(t_E) \ .$$

Die eben beschriebene Prognostizierung einer Zustandsgröße $Z_i$, wie dem Gewichtsverlust des Garguts i, zum Garendzeitpunkt $t_E$ nach Erfassen eines Garprozeß-Ist-Ablaufes bis zum Zeitpunkt $t_M$ und Zuordnung desselben zu einem repräsentativen Garprofil ist in Figur 4 verdeutlicht, wobei das ausgewählte repräsentative Garprofil $X_n$ von der Darstellung als akkumulativer Prozentsatz zu einem repräsentativen Verlauf eines Gewichtsverlusts $X'_n$ umgerechnet worden ist.

Zusammenfassend ist somit festzuhalten, daß mittels einer Cluster-Analyse eine automatische Produkterkennung und Garprozeßführung durch Zuordnung eines Garprozeß-Ist-Ablaufes, der bis zu einem Zeitpunkt $t_M$ gemessen wird, zu einem zuvor bestimmten repräsentativen Garprofil möglich ist.

Die in der voranstehenden Beschreibung, in den Ansprüchen sowie in den Zeichnungen offenbarten Merkmale der Erfindung können sowohl einzeln als auch in jeder beliebigen Kombination für die Realisierung der Erfindung in ihren verschiedenen Ausführungen wesentlich sein.

**Patentansprüche**

1. Verfahren zum Garen von Gargut in einem Garraum eines Gargeräts mit einer Steuer- und/oder Regeleinrichtung, die Zugriff hat auf primäre, zeitlich geordnete Meßdaten $Z_i$ sowie sekundäre, zeitlich nicht geordnete Daten zumindest einer Gargut- und/oder Gargeräte-Zustandsgröße, **dadurch gekennzeichnet, daß** in deren Abhängigkeit der Garprozeß durch folgende Schritte geführt wird:

   - Erfassen eines Garprozeß-Ist-Ablaufs der Meßdaten $Z_i$ des Garguts i bis zu einem bestimmten Zeitpunkt $t_M$ vor dem Garendzeitpunkt $t_E$,
   - Zuordnen des erfaßten Garprozeß-Ist-Ablaufs $Z_i$ zu einem über eine Cluster-Analyse bestimmten repräsentativen Garprofil $X_n$, wobei die Cluster-Analyse ein Standardisieren oder Vergleichbar-Machen von Garprozeß-Ist-Abläufen und ein Klassifizieren von vergleichbar gemachten Garprozeß-Ist-Abläufen umfaßt, wobei bei der Cluster-Analyse zumindest eine Regression, ein Ähnlichkeitsvergleich, ein Koeffizientenvergleich, eine Bereichsbildung, eine Interpolation und/oder eine Extrapolation durchgeführt wird,
   - Führen des Garprozesses in Abhängigkeit von dem bestimmten repräsentativen Garprofil $X_n$, wobei i und $n \in |N$.

2. Verfahren nach Anspruch 1, **dadurch gekennzeichnet, daß** Garprozeß-Ist-Abläufe durch Bestimmen eines akkumulierten Prozentsatzes $Y_i$ vom 100%-Endwert der Meßdaten $Z_i$ zum Garendzeitpunkt $t_E$ als Funktion der Zeit $t_j$ mit $j \in |N$ standardisiert oder vergleichbar gemacht werden, wobei der 100%-Endwert als Sollgröße $Z_i(t_E)$ zum Garendzeitpunkt $t_E$ vorzugsweise vorgegeben wird.

3. Verfahren nach einem der vorangehenden Ansprüche, **dadurch gekennzeichnet, daß** die Sollgröße $Z_i(t_E)$ eingestellt oder von einem gespeicherten repräsentativen Garprofil $X_n$ übernommen wird.

4. Verfahren nach einem der vorangehenden Ansprüche, **dadurch gekennzeichnet, daß** das Klassifizieren von vergleichbar gemachten Garprozeß-Ist-Abläufen folgende Schritte umfaßt:

   - Bestimmen von Abstandsquadratsummen $A_{il}$ zum Garendzeitpunkt $t_E$ mit $l \in |N$, wobei

$$A_{il}(t_E) = \sum_{j=0}^{E} (Y_i(t_j) - Y_l(t_j))^2 ,$$

   - Bestimmen einer Anzahl N von Klassen $K_n$ mit n={1,2......N}, und
   - Definieren jeder Klasse $K_n$ über einen einzigen oder jeweils einen Maximalwert der Abstandsquadratsumme $A_{il}(t_j)$.

5. Verfahren nach einem der vorangehenden Ansprüche, **dadurch gekennzeichnet, daß** die Cluster-Analyse ein Zuordnen eines repräsentativen Garprofils $X_n(t_j)$ zu jeder Klasse $K_n$ umfaßt, wobei ein repräsentatives Garprofil $X_n(t_j)$ vorzugsweise durch Berechnung des Mittelwertes und/oder Schwerpunkts der akkumulierten Prozentsätze $Y_i(t_j)$ pro Klasse $K_n$ bestimmt oder aus einer Speichereinrichtung abgerufen wird.

6. Verfahren nach Anspruch 5, **dadurch gekennzeichnet, daß** das Zuordnen eines Garprozeß-Ist-Ablaufs $Z_i$ zu einem repräsentativen Garprofil $X_n(t_j)$ einer Klasse $K_n$ Folgendes umfaßt:

   - Bestimmen eines Abweichungswertes $S_{in}(t_M)$ für jede Klasse $K_n$ innerhalb eines Zeitintervalls $t_M$, wobei

$$S_{in}(t_M) = \sum_{j=0}^{M} \left( \left( \frac{Y_i(t_j)}{X_n(t_j)} \right) - \left( \frac{Y_i(t_{j+1})}{X_n(t_{j+1})} \right) \right)^2$$

mit $X_n > 0$, und
- Ermitteln des Abweichungswertes $S_{in}(t_M)$ mit dem betragsmäßig kleinsten Wert für den Prozentsatz $Y_i(t_M)$ zum Zeitpunkt $t_M$.

7. Verfahren nach einem der vorangehenden Ansprüche, **dadurch gekennzeichnet, daß** das Führen des Garprozesses ein Prognostizieren von Meßdaten $Z_i(t_E)$ am Garendzeitpunkt $t_E$ über das bestimmte repräsentative Garprofil $X_n(t_j)$ umfaßt.

8. Verfahren nach Anspruch 7, **dadurch gekennzeichnet, daß** das Prognostizieren folgende Schritte umfaßt:

- Zuordnen des akkumulierten Prozentsatzes $Y_i(t_j)$ zu einer Klasse $K_n$ und somit einem repräsentativen Garprofil $X_n(t_j)$,
- Ermitteln eines Multiplikators $P_{in}$ zum Zeitpunkt $t_M$, wobei

$$P_{in} = \frac{Z_i(t_M)}{X_n(t_M)},$$

wobei $X_n > 0$ und
- Extrapolieren durch Multiplizieren des Endwertes $X_n(t_E)$ des repräsentativen Garprofils mit dem Multiplikator, wobei

$$X_n(t_E)P_n = Z_i(t_E).$$

9. Verfahren nach einem der vorangehenden Ansprüche, **dadurch gekennzeichnet, daß** der Gewichtsverlust des Gargutes, die Kerntemperatur des Gargutes, der Durchmesser des Gargutes, die Dichte des Gargutes, der Reifegrad des Gargutes, der pH-Wert des Gargutes, die Konsistenz des Gargutes, der Lagerungszustand des Gargutes, der Geruch des Gargutes, der Geschmack des Gargutes, die Bräunung des Gargutes, die Krustenbildung des Gargutes, der Vitaminabbau des Gargutes, die Entstehung kanzerogener Substanzen im Gargut, die Hygiene des Gargutes, die Wasseraktivität des Gargutes, der Feuchtegehalt des Gargutes, der Eiweißgehalt des Gargutes und die Wärmeleitfähigkeit des Gargutes jeweils eine Gargut-Zustandsgröße darstellt, die von den primären Meßdaten umfaßt wird.

10. Verfahren nach einem der vorangehenden Ansprüche, **dadurch gekennzeichnet, daß** die Temperatur im Garraum, die Feuchte im Garraum und die Luftbewegungsrate im Garraum jeweils eine Gargeräte-Zustandsgröße darstellt, die von den primären Meßdaten umfaßt wird.

11. Verfahren nach einem der vorangehenden Ansprüche, **dadurch gekennzeichnet, daß** als sekundäre Daten zumindest eine Geräteeingabe durch einen Nutzer, umfassend die Auswahl eines Garprogramms und/oder einer Gargut-Zustandsgröße am Garendzeitpunkt und/oder Gargeräte-Zustandsgröße am Garendzeitpunkt, und/oder zumindest ein äußerer Umstand, wie das Datum, die Uhrzeit, die Jahreszeit, die Witterung und/oder die geographische Lage, erfaßt wird bzw. werden.

12. Verfahren nach einem der vorangehenden Ansprüche, **dadurch gekennzeichnet, daß** jeder gemessene Garprozeß-Ist-Ablauf $Z_i$, jeder bestimmte akkumulierte Prozentsatz $Y_i$ und/oder jedes bestimmte repräsentative Garprofil $X_n$ in einer Speichereinrichtung gespeichert wird, automatisch oder wahlweise.

13. Gargerät mit einem Garraum zum Aufnehmen von Gargut, einer Meßeinrichtung zum Erfassen von Meßdaten, einer Speichereinrichtung zum Speichern von Meßdaten und daraus bestimmten Größen und einer Steuer- und/oder Regeleinrichtung ausgelegt zum Fuhren eines Garprozesses gemäß einem Verfahren nach einem der vorangehenden Ansprüche.

14. Gargerät nach Anspruch 13, **dadurch gekennzeichnet, daß** die Meßeinrichtung und die Steuer- und/oder Regeleinrichtung in einem ausgebildet sind, vorzugsweise ebenfalls umfassend die Speichereinrichtung, insbesondere integriert in einem Garprozeßfühler.

**Claims**

1. Method for cooking food in a cooking chamber of a cooking appliance with a control and/or regulating device that has access to primary, time ordered measurement data $Z_i$ and to secondary, not time ordered data of at least one state variable relating to food and/or cooking appliances, **characterized in that** the cooking process is guided as a function thereof through the following steps:

   - acquiring an actual cooking process sequence of the measurement data $Z_i$ of the food i up to a specific time $t_M$ before the end cooking time $t_E$,
   - assigning the acquired actual cooking process sequence $Z_i$ to a representative cooking profile $X_n$ determined via cluster analysis, the cluster analysis comprising standardizing or rendering comparable actual cooking process sequences and classifying actual cooking process sequences rendered comparable, at least a regression, a similarity comparison, a coefficient comparison, a range formation, an interpolation and/or an extrapolation being carried out in the cluster analysis, and
   - conducting the cooking process as a function of the representative cooking profile $X_n$ determined, in which case i and $n \in |N$.

2. Method according to Claim 1, **characterized in that** actual cooking process sequences are standardized or rendered comparable with the aid of $j \in |N$ by determining an accumulated percentage $Y_i$ from the 100% final value of the measurement data $Z_i$ to the end cooking time $t_E$ as a function of time $t_j$, the 100% final value preferably being prescribed as desired variable $Z_i(t_E)$ at the end cooking time $t_E$.

3. Method according to one of the preceding claims, **characterized in that** the desired variable $Z_i(t_E)$ is set or is adopted from a stored representative cooking profile $X_n$.

4. Method according to one of the preceding claims, **characterized in that** the classification of actual cooking process sequences rendered comparable comprises the following steps:

   - determining sums of squared distances $A_{il}$ relating to the end cooking time $t_E$ with $1 \in |N$, in which case

$$A_{il}(t_E) \;=\; \sum_{j=0}^{E} \left( Y_i(t_j) - Y_l(t_j) \right)^2 ,$$

   - determining a number N of classes $K_n$ with n = {1,2.....N}, and
   - defining each class $K_n$ via a single, or respectively a maximum value of the sum of square distances $A_{il}(t_j)$.

5. Method according to one of the preceding claims, **characterized in that** the cluster analysis comprises assigning a representative cooking profile $X_n(t_j)$ to each class $K_n$, a representative cooking profile $X_n(t_j)$ preferably being determined by calculating the mean value and/or centroid of the accumulated percentages $Y_i(t_j)$ per class $K_n$, or being retrieved from a storage device.

6. Method according to Claim 5, **characterized in that** assigning an actual cooking process sequence $Z_i$ to a representative cooking profile $X_n(t_j)$ of a class $K_n$ comprises the following:

   - determining a deviation value $s_{in}(t_M)$ for each class $K_n$ within a time interval $t_M$, in which case

$$S_{in}(t_M) \;=\; \sum_{j=0}^{M} \left( \left( \frac{Y_i(t_j)}{X_n(t_j)} \right) - \left( \frac{Y_i(t_{j+1})}{X_n(t_{j+1})} \right) \right)^2$$

with $X_n > 0$, and
- determining the deviation value $S_{in}(t_M)$ having the smallest absolute value for the percentage $Y_i(t_M)$ at time $t_M$.

7. Method according to one of the preceding claims, **characterized in that** conducting the cooking process comprises predicting measured data $Z_i(t_E)$ at the end cooking time $t_E$ via the representative cooking profile $X_n(t_j)$ determined.

8. Method according to Claim 7, **characterized in that** predicting comprises the following steps:

- assigning the accumulated percentage $Y_i(t_j)$ to a class $K_n$ and thus to a representative cooking profile $X_n(t_j)$,
- determining a multiplier $P_{in}$ relating to the time $t_M$, in which case

$$P_{in} \;=\; \frac{Z_i(t_M)}{X_n(t_M)} \,,$$

wherein $X_n > 0$ and
- extrapolating by multiplying the final value $X_n(t_E)$ of the representative cooking profile by the multiplier, in which case

$$X_n(t_E)\, P_n \;=\; Z_i(t_E)\,.$$

9. Method according to one of the preceding claims, **characterized in that** the weight loss of the food, the core temperature of the food, the diameter of the food, the density of the food, the ripeness of the food, the pH value of the food, the consistency of the food, the storage condition of the food, the smell of the food, the taste of the food, the browning of the food, the encrustment of the food, the vitamin depletion of the food, the production of carcinogenic substances in the food, the hygiene of the food, the water activity of the food, the moisture content of the food, the protein content of the food and the thermal conductivity of the food respectively represents a food state variable that is covered by the primary measurement data.

10. Method according to one of the preceding claims, **characterized in that** the temperature in the cooking chamber, the moisture in the cooking chamber and the rate of air movement in the cooking chamber respectively constitutes a state variable relating to cooking appliances which is covered by the primary measurement data.

11. Method according to one of the preceding claims, **characterized in that** at least one input into the appliance by a user, comprising the selection of a cooking programme and/or a state variable relating to food at the end cooking time and/or state variable relating to cooking appliances at the end cooking time, and/or at least one external circumstance such as the date, the time of day, the season, the weather and/or the geographical location, is or are acquired as secondary data.

12. Method according to one of the preceding claims, **characterized in that** each measured actual cooking process sequence $Z_i$, each accumulated percentage $Y_i$ determined and/or each representative cooking profile $X_n$ determined are/is stored automatically or optionally in a storage device.

13. Cooking appliance having a cooking chamber for holding food, a measuring device for acquiring measurement data, a storage device for storing measurement data and variables determined therefrom, and a control and/or regulating device designed for conducting a cooking process in accordance with a method according to one of the preceding claims.

**14.** Cooking appliance according to Claim 13, **characterized in that** the measuring device and the control and/or regulating device are designed as one, preferably likewise comprising the storage device, in particular in a fashion integrated in a cooking process sensor.

## Revendications

**1.** Procédé de cuisson d'un produit à cuire dans un espace de cuisson d'un appareil de cuisson comportant un dispositif de commande et/ou de régulation ayant accès à des données primaires de mesure $Z_i$, assignées temporellement, ainsi qu'à des données secondaires, non assignées temporellement, d'au moins une variable d'état de produit à cuire et/ou d'appareil de cuisson, **caractérisé**, en fonction du cycle de cuisson, par les étapes suivantes consistant à :

- enregistrer un déroulement Ist de cycle de cuisson pour les données de mesure $Z_i$ du produit à cuire i jusqu'à un instant déterminé $t_M$ situé avant l'instant final de cuisson $t_E$,
- assigner le déroulement de cycle de cuisson enregistré $Z_i$ à un profil de cuisson $X_n$ représentatif déterminé par l'intermédiaire d'une analyse de groupement, l'analyse de groupement comportant une standardisation ou une uniformisation de déroulements Ist de cycle de cuisson et une classification de déroulements Ist de cycle de cuisson uniformisés, et une régression, une comparaison de similitude, une comparaison de coefficients, une compartimentalisation, une interpolation et/ou une extrapolation étant effectuée(s) lors de l'analyse de groupement,
- régler le cycle de cuisson en fonction du profil de cuisson $X_n$ représentatif déterminé, sachant que i et $n \in |N$.

**2.** Procédé selon la revendication 1, **caractérisé en ce que** les déroulements Ist de cycle de cuisson sont standardisés ou uniformisés grâce à la détermination d'un pourcentage cumulé $Y_i$ de la valeur finale 100 % des données de mesure $Z_i$ à l'instant final de cuisson $t_E$ en tant que fonction du temps $t_j$, avec $j \in |N$, la valeur finale 100 % étant de préférence spécifiée en tant que variable Soll $Z_i(t_E)$ pour l'instant final de cuisson $t_E$.

**3.** Procédé selon l'une quelconque des revendications précédentes, **caractérisé en ce que** la variable Soll $Z_i(t_E)$ est ajustée ou est prise en charge par un profil de cuisson $X_n$ représentatif mémorisé.

**4.** Procédé selon l'une quelconque des revendications précédentes, **caractérisé en ce que** la classification des déroulements Ist de cycle de cuisson uniformisés comprend les étapes suivantes consistant à :

- déterminer les sommes quadratiques $A_{il}$ d'intervalle à l'instant final de cuisson $t_E$ avec $l \in |N$, avec

$$A_{il}(t_E) = \sum_{j=0}^{E} (Y_i(t_j) - (Y_l(t_j))^2,$$

- déterminer un nombre N de classes $K_n$ avec n = {1, 2 ... N}, et
- définir chaque classe $K_n$ par l'intermédiaire d'une unique somme quadratique $A_{il}(t_j)$ d'intervalle ou respectivement d'une valeur maximale des sommes quadratiques $A_{il}(t_j)$ d'intervalle.

**5.** Procédé selon l'une quelconque des revendications précédentes, **caractérisé en ce que** l'analyse de groupement comporte une assignation d'un profil de cuisson $X_n(t_j)$ représentatif à chaque classe $K_n$, un profil de cuisson $X_n(t_j)$ représentatif étant déterminé de préférence grâce au calcul de la valeur moyenne et/ou du bas et du barycentre des pourcentages cumulés $Y_i(t_j)$ par classe $K_n$ ou étant sollicité auprès d'un dispositif de mémorisation.

**6.** Procédé selon la revendication 5, **caractérisé en ce que** l'assignation d'un déroulement Ist de cycle de cuisson $Z_i$ à un profil de cuisson $X_n(t_j)$ représentatif d'une classe $K_n$ comporte les étapes suivantes, consistant à :

- déterminer une valeur d'écart $S_{in}(t_M)$ pour chaque classe $K_n$ à l'intérieur d'un intervalle de temps $t_M$, avec

$$S_{in}(t_M) = \sum_{j=0}^{M} \left( \left( \frac{Y_i(t_j)}{X_n(t_j)} \right) - \left( \frac{Y_i(t_{j+l})}{X_n(t_{j+l})} \right) \right)^2$$

avec $X_n > 0$, et

- déterminer la valeur d'écart $S_{in}(t_M)$ avec la valeur de montant la plus petite pour le pourcentage $Y_i(t_M)$ à l'instant $t_M$.

7. Procédé selon l'une quelconque des revendications précédentes, **caractérisé en ce que** la régulation du cycle de cuisson comporte une prédiction de données de mesure $Z_i(t_E)$ à l'instant final de cuisson $t_E$ par l'intermédiaire du profil de cuisson $X_n(t_j)$ représentatif déterminé.

8. Procédé selon la revendication 7, **caractérisé en ce que**
la prédiction comporte les étapes suivantes consistant à :

- assigner le pourcentage cumulé $Y_i(t_j)$ à une classe $K_n$ et ainsi à un profil de cuisson $X_n(t_j)$ représentatif,
- déterminer un multiplicateur $P_{in}$ à l'instant $t_M$, avec

$$P_{in} = \frac{Z_i(t_M)}{X_n(t_M)} ,$$

où $X_n > 0$ et
- extrapoler par multiplication de la valeur finale $X_n(t_E)$ du profil de cuisson représentatif par le multiplicateur, avec

$$X_n(t_E)P_n = Z_i(t_E).$$

9. Procédé selon l'une quelconque des revendications précédentes, **caractérisé en ce que** la perte de poids du produit à cuire, la température centrale du produit à cuire, le diamètre du produit à cuire, la densité du produit à cuire, le degré de maturation du produit à cuire, la valeur de pH du produit à cuire, la consistance du produit à cuire, l'état de stockage du produit à cuire, l'odeur du produit à cuire, le goût du produit à cuire, le brunissement du produit à cuire, la formation de croûtes du produit à cuire, la décomposition des vitamines du produit à cuire, l'apparition de substances cancérigènes dans le produit à cuire, la salubrité du produit à cuire, l'activité aqueuse du produit à cuire, la teneur en humidité du produit à cuire, la teneur en protéines du produit à cuire et la conductibilité thermique du produit à cuire représentent respectivement une variable d'état de produit à cuire, qui est comprise dans les données de mesure primaires.

10. Procédé selon l'une quelconque des revendications précédentes, **caractérisé en ce que** la température dans l'espace de cuisson, l'humidité dans l'espace de cuisson et le taux de circulation d'air dans l'espace de cuisson représentent respectivement une variable d'état d'appareil de cuisson, qui est comprise dans les données de mesure primaires.

11. Procédé selon l'une quelconque des revendications précédentes, **caractérisé en ce qu'**au moins une introduction d'informations concernant les appareils, comportant les choix d'un programme de cuisson et/ou d'une variable d'état de produit à cuire à l'instant final de cuisson et/ou d'une variable d'état de l'appareil de cuisson à l'instant final de cuisson, et/ou au moins une circonstance extérieure, comme la date, l'heure, l'année, la condition atmosphérique et/ou la position géographique, est/sont enregistrée(s) en tant que données secondaires.

12. Procédé selon l'une quelconque des revendications précédentes, **caractérisé en ce que** chaque déroulement lst de cycle de cuisson $Z_i$ mesuré, chaque pourcentage cumulé $Y_i$ déterminé et/ou chaque profil de cuisson $X_n$ représentatif déterminé est mémorisé, de manière automatique ou choisie, dans un dispositif de mémorisation.

13. Appareil de cuisson comportant un espace de cuisson pour la réception de produit à cuire, un dispositif de mesure pour l'enregistrement de données de mesure, un dispositif de mémorisation pour la mémorisation de données de mesure et de variables déterminées à partir de celles-ci et un dispositif de commande et/ou de régulation conçu pour la régulation d'un cycle de cuisson conformément à un procédé selon l'une quelconque des revendications précédentes.

14. Appareil de cuisson selon la revendication 13, **caractérisé en ce que**
le dispositif de mesure et le dispositif de commande et/ou de régulation sont conçus d'un seul tenant, et comportent de préférence également le dispositif de mémorisation, en particulier de manière intégrée à un capteur de cycle de cuisson.

# Fig. 1a

Merkmals-Ausprägung/ Verlauf $Z_i$

Klasse $K_a$

Gargut i

Garzeit $t_j$

$t_E$

# Fig. 1b

Merkmals-Ausprägung/ Verlauf $Z_i$

Klasse $K_b$

Gargut i

Garzeit $t_j$

$t_E$

# Fig. 2

%

Akk. Prozentsatz vom Endwert

100

80

60

40

20

0

$Y_i(t_j)$

Garzeit $t_j$

$t_E$

Zeit

# Fig. 3

%

Akk. Prozentsatz vom Endwert

100

80

$Y_i(t_j)$

60

40

$Y_l(t_j)$

20

9

8

7

6

5

4

3

2

1

0

Zeit

# Fig. 4

$Z_i(t_E)$

$Z_i$

$X'_n(t_E)$

$Z_i(t_M)$

$X'_n(t_M)$

$X'_n$

$t_M$

$t_E$

Zeit

## EP 1 581 059 B1

**In der Beschreibung aufgeführte Patentdokumente**

- DE 19718399 A1
- DE 19609116 A1
- US 5352866 A
- US 4970359 A
- US 4682013 A
- GB 2203320 A1
- EP 0701387 A2
- EP 0550312 A2